(19) **Europäisches Patentamt**

**European Patent Office**

**Office européen des brevets**

(11) Veröffentlichungsnummer: **0 025 828**
**B1**

(12) # EUROPÄISCHE PATENTSCHRIFT

(45) Veröffentlichungstag der Patentschrift:
**22.12.82**

(51) Int. Cl.³: **C 08 G 69/40,** C 08 G 69/44,
C 08 G 81/00, C 08 G 69/14

(21) Anmeldenummer: **80104051.0**

(22) Anmeldetag: **12.07.80**

(54) **Verfahren zur Herstellung von Polyether(ester)amiden und ihre Verwendung.**

(30) Priorität: **13.09.79 DE 2936977**

(43) Veröffentlichungstag der Anmeldung:
**01.04.81 Patentblatt 81/13**

(45) Bekanntmachung des Hinweises auf die Patenterteilung:
**22.12.82 Patentblatt 82/51**

(84) Benannte Vertragsstaaten:
**BE CH FR GB IT LI NL**

(56) Entgegenhaltungen:
**EP-A-0 023 956**
**DE-A-1 520 551**
**DE-A-2 712 987**
**DE-A-2 837 687**
**DE-A-2 856 787**
**DE-A-2 932 234**

(73) Patentinhaber: **CHEMISCHE WERKE HÜLS AG,
Postfach 1320, D-4370 Marl 1 (DE)**

(72) Erfinder: **Mumcu, Salih, Dr., Bitterfelder Strasse 9 a,
D-4370 Marl (DE)**

Verfahren zur Herstellung von Polyether(ester)amiden und ihre Verwendung.

Die Herstellung von Polyether(ester)amiden ist grundsätzlich bekannt.

Polyether und Polyamide sind bekanntlich miteinander unverträglich. Wegen der Heterogenität der Reaktionsmasse verläuft die Polykondensation sehr langsam. Ausserdem gelangt man nur zu Formmassen mit hohem Extragehalt und relativ niedriger Molmasse, so dass keine ausreichend stabile Formkörper erhalten werden können, wie sie nach dem Spritzguss- und insbesondere Extrusionsverfahren hergestellt werden. Bei der Anwendung der dabei erforderlichen hohen Katalysatorkonzentrationen gelangt man zu Formmassen, die nicht ausreichend hydrolysestabil sind.

Nach dem Verfahren der deutschen Patentanmeldung P 29 32 234.7 gelangt man zu vorteilhaften Formmassen, wenn die Polyether und Polyamide, welche als carboxylendgruppentragende Polyamide und hydroxylendgruppentragende bzw. aminoendgruppentragende Polyether oder als aminoendgruppentragende Polyamide und carboxylendgruppentragende Polyether vorliegen, vor der Polykondensation einer Homogenisierung unter Wasserdampfdruck unterworfen werden.

Vorteilhaft geht man dabei von Polyamiden aus, welche durch hydrolytische Polymerisation in Gegenwart von Dicarbonsäuren erhalten worden sind. Das Öffnen der Lactamringe unter Wasserdampfdruck bei 15 bis 20 bar dauert bei den höhergliedrigen Lactamen meist recht lange, im allgemeinen 8 bis 12 Stunden.

Es ist zwar bekannt, Polyether(ester)amide herzustellen, wobei das Öffnen der Lactamringe ohne Wasserdampfdruck in Gegenwart von Dicarbonsäuren und Diolen oder Oligoetherdiolen bzw. Oligoetherestern durchgeführt wird. Die auf diese Weise erhaltenen Produkte enthalten jedoch trotz langer Ankondensationszeit bis zu 24 Stunden noch zu viel unumgesetztes Lactammonomer. Ihre Molmassen sind zu niedrig, so dass sie nicht zur Herstellung von Formkörpern nach dem Extrusionsverfahren geeignet sind (DE-OS 21 35 770, Beispiel).

Aufgabe der Erfindung ist es daher, ein Verfahren bereitzustellen, das erlaubt, auch carboxylendgruppentragende Polyamide einzusetzen, welche unter Normaldruck in Abwesenheit von Wasser erhalten worden sind. Ferner sollte das Öffnen der Lactamringe in kurzer Zeit gelingen, wobei möglichst wenig Katalysator einzusetzen ist, um ausreichend hydrolysestabile Produkte zu erhalten und schliesslich sollte die Gesamtreaktionszeit auch im Produktionsmassstab nicht ungebührlich lange sein. Zusätzlich sollten die erhaltenen thermoplastischen Polyether(ester)amide ausreichend hochmolekular sein, um sie zu Formkörpern nach dem Extrusionsverfahren verarbeiten zu können.

Die Lösung der Aufgabe gelingt, wenn man carboxylendgruppentragende Polyamide einsetzt, welche erhalten worden sind, durch Aufschmelzen eines Gemisches aus Lactamen mit mindestens 8 Kohlenstoffatomen und Dicarbonsäuren im Molverhältnis 100:1 bis 100:15 in Gegenwart eines Katalysators in einer Inertgasatmosphäre unter Normaldruck und in Abwesenheit von Wasser bei Temperaturen von 230 bis 300 °C, wobei das Aufschmelzen so lange erfolgt, bis die Lactame mindestens zu 98% umgesetzt sind.

Als Lactame mit mindestens 8 Kohlenstoffatomen werden Capryllactam Laurinlactam oder ihre Mischungen verwendet. Vorzugsweise wird Laurinlactam eingesetzt.

Als Dicarbonsäuren werden lineare aliphatische Dicarbonsäuren der allgemeinen Formel $HOOC-(CH_2)_x-COOH$, in der x einen Wert zwischen 4 und 11 darstellen kann, und/oder verzweigte aliphatische Dicarbonsäuren verwendet. Beispielsweise seien genannt: Adipinsäure, Trimethyladipinsäure, Pimelinsäure, Korksäure, Azelainsäure, Sebacinsäure, Decandicarbonsäure.

Ferner können cycloaliphatische und/oder aromatische Dicarbonsäuren mit mindestens 8 Kohlenstoffatomen, wie z.B. Hexahydroterephthalsäure, Terephthalsäure, Isophthalsäure, Phthalsäure oder Naphthalindicarbonsäure zum Einsatz kommen. Bevorzugt werden Decandicarbonsäure und Isophthalsäure.

Die verwendeten Polyether sind von Ethylenoxid, Propylenoxid und Tetrahydrofuran abzuleiten. Die Polyether können Homo- und/oder Copolymere sein. Auch Gemsiche von Homo- und/oder Copolymeren können eingesetzt werden. Ihre zahlenmittleren Molmassen bewegen sich zwischen 160 und 3000, vorzugsweise zwischen 300 und 2200, insbesondere zwischen 500 und 1200. Sie enthalten als Endgruppen OH- und/oder $NH_2$-Gruppen. Bevorzugt wird Polytetrahydrofuran mit OH-Endgruppen eingesetzt. Die Herstellung von Polyalkylenoxiden mit $NH_2$-Endgruppen kann nach bekannten Verfahren aus DE-OS 15 70 542, DE-OS 24 12 056, DE-OS 24 12 057 und US-PS 2 401 607 erfolgen.

Vorteilhaft beträgt das Molverhältnis Lactam zu Dicarbonsäuren 100:2 bis 100:10, insbesondere 100:3 bis 100:7.

Als Katalysatoren eignen sich Phosphorsäure, Aminsalze der Phosphorsäure, Zinkacetat und Calciumacetat in Mengen von 0,01 bis 0,3 Gewichtsprozent, bezogen auf die gesamte Masse. Bevorzugt wird Phosphorsäure in Mengen von 0,02 bis 0,1 Gewichtsprozent. Diese geringen Mengen haben keinen negativen Einfluss auf die Hydrolysestabilität des Produkts. Die anzuwendende Katalysatormenge kann um so niedriger sein, je kleiner das Molverhältnis Lactam:Dicarbonsäure ist.

Die Herstellung der Produkte erfolgt zweckmässigerweise in einem Rührautoklav. Es ist jedoch auch möglich, die acidolytische Ringöffnung der Lactame in Abwesenheit von Wasser unter einer Stickstoffatmosphäre in einem einfachen Rührkessel vorzunehmen und das erhaltene carboxylgruppenhaltige Polyamid anschliessend in einem Rührautoklaven weiterzubehandeln.

Die Lactamringe werden unter $N_2$-Abdeckung bei 230 bis 300 °C, vorzugsweise 250 bis 290 °C, geöffnet und polymerisiert. Um einen besseren Luftausschluss zu gewährleisten, kann bei $N_2$-Überdrücken von z.B. 0,5 bar gearbeitet werden.

Die Ringöffnung dauert weniger als 8 Stunden. Im besonders bevorzugten Einsatzverhältnis reicht eine Zeit von 5 bis $1^1/_2$ Stunden aus. In dieser Zeit werden die Lactammonomeren zu 98% bis 99,7% umgesetzt.

Anschliessend wird die Polyetherkomponente im Temperaturbereich von 230 bis 290 °C, vorzugsweise 250 bis 280 °C, in einer dem Molverhältnis Polyether:Dicarbonsäure = 1:0,95 bis 1:1,05, vorzugsweise 1:1, entsprechende Menge hinzugegeben, anschliessend so viel Wasser in den Reaktor gebracht, dass der Wasserdampfdruck im Reaktor 5 bis 25 bar, vorzugsweise 10 bis 20 bar, beträgt. Die verwendete Wassermenge hängt von der Temperatur der Reaktionsmasse, der Reaktorgrösse, dem Füllgrad des Reaktors und dem molaren Verhältnis der Lactame und Dicarbonsäuren ab. Bei ca. 50 Vol-% Füllgrad des Reaktors wird der erforderliche Wasserdampfdruck mit 1 bis 30 Gewichtsprozent, bevorzugt 2 bis 20 Gewichtsprozent Wasser, bezogen auf die Lactame, erreicht.

Unter diesem Druck wird bei 200 bis 300 °C, vorzugsweise 220 bis 280 °C, 15 Minuten bis 4 Stunden, vorzugsweise 30 Minuten bis 2 Stunden, gerührt. Nach dem Entspannen des Überdrucks wird wie üblich bei Normaldruck unter $N_2$-Überleiten oder im Vakuum zwischen 100 mbar und 1 mbar, vorzugsweise 90 mbar und 5 mbar, bei Temperaturen von 250 bis 290 °C, vorzugsweise 260 bis 280 °C, prolykondensiert.

Die gewünschten relativen Lösungsviskositäten der erhaltenen Polyetheramide und Polyether(ester)amide liegen zwischen 1,4 und 2,4, bevorzugt zwischen 1,6 und 2,2, gemessen nach DIN 53 727, in m-Kresol bei 25 °C.

Polyetheramide und Polyether(ester)amide können Zusatzstoffe, wie Stabilisatoren gegen Licht- und thermooxidativen Abbau, Flammschutzmittel, Farbstoffe, Pigmente, Weichmacher, Verarbeitungshilfsmittel und Füllstoffe enthalten, die vor, während oder nach der Polykondensation zugegeben werden.

Die erfindungsgemäss hergestellten Polyetheramide und Polyether(ester)amide sind zur Herstellung von Formkörpern mit hoher Schlagzähigkeit bei tiefen Temperaturen, wie Rohren, Filmen und Folien nach Spritzgiess- oder Extrusionsverfahren geeignet.

Die Erfindung ist nachstehend anhand von Ausführungsbeispielen näher erläutert.

Die Lactamgehalte wurden gaschromatographisch bestimmt. Die angegebenen Molmassen stellen zahlenmittlere Molmassen dar.

Beispiel 1

295,5 kg Laurinlactam (1500 Mol), 26,38 kg Decandicarbonsäure (114,5 Mol) und 0,22 kg Phosphorsäure wurden in einem 1 m³-Rührautoklaven in einer $N_2$-Atmosphäre $2^1/_2$ Stunden auf 280 °C erhitzt. Der Reaktionsmasse wurde eine Probe entnommen und gaschromatographisch der Laurinlactamumsatz bestimmt. Es wurde gefunden, dass 99,65% des ursprünglichen Lactams umgesetzt waren. Anschliessend wurden 120 kg $\alpha,\omega$-Dihydroxy-(polytetrahydrofuran) mit der Molmasse 1000 (120 Mol) und 13,3 kg Wasser hinzugefügt und unter dem sich einstellenden Druck von ca. 18 bar in einem Temperaturbereich von 230 bis 260 °C 2 Stunden gerührt, 2 Stunden entspannt und dabei die Temperatur bis 270 °C erhöht. Es wurde bei Normaldruck unter Überleiten von Stickstoff polykondensiert. Nach 14 Stunden wurde ein Produkt mit einem $\eta_{rel}$-Wert von 1,94 erhalten. An Formkörpern wurde eine Reissfestigkeit von 28 N/mm² nach DIN 53 445 gemessen. Das Material wurde zu Folien extrudiert. Sie zeigten keine Gelstippen.

Beispiel 2

315,2 kg Laurinlactam (1600 Mol), 16,56 kg Decandicarbonsäure (72 Mol) und 0,2 kg Phosphorsäure wurden in einem 1 m³-Rührautoklaven in einer Stickstoffatmosphäre bei Normaldruck 3 Stunden auf 280 °C erhitzt. Das erhaltene Polymerisat enthielt nach 0,4 Gewichtsprozent Laurinlactam. Anschliessend wurden 75,6 kg $\alpha,\omega$-Dihydroxy(polytetrahydrofuran) mit der Molmasse 1000 (75,6 Mol) und 15,7 kg Wasser hinzugefügt und unter dem sich einstellenden Druck von ca. 20 bar bei 230 bis 260 °C 1 Stunde gerührt. Der Reaktor wurde in 2 Stunden entspannt, dabei die Temperatur bis 270 °C erhöht. Innerhalb von 3 Stunden wurde ein Vakuum von 100 mbar angelegt und 7 Stunden gehalten. Das erhaltene Produkt weist einen $\eta_{rel}$-Wert von 1,98 auf. Sein Extraktgehalt in heissem Ethanol beträgt 2,3 Gewichtsprozent. Nach 2 monatiger Lagerung bei Raumtemperatur konnte keine Abnahme in den mechanischen Eigenschaften festgestellt werden.

Vergleichsbeispiel (Verfahren gemäss DE-OS 21 35 770)

315,2 kg Laurinlactam (1600 Mol), 48,65 kg Polyetherester aus 7,01 kg Adipinsäure (48 Mol) und 43,34 kg $\alpha,\omega$-Dihydroxy-(polytetrahydrofuran) mit der Molmasse 860 (50,4 Mol) und 0,4 kg Phosphorsäure wurden in einem 1 m³-Rührkessel 16 Stunden auf 280 °C erhitzt. Dann wurde bei 260 °C 5 Stunden $N_2$ übergeleitet und 10 Stunden ein Vakuum von 1 mbar angelegt. Dabei wurden 18% des eingesetzten Laurinlactams zurückgewonnen. Das erhaltene, braune und spröde Material wies einen $\eta_{rel}$-Wert von 1,62 auf.

Beispiel 3

315,2 kg Laurinlactam (1600 Mol), 7,01 kg Adipinsäure (48 Mol) und 0,4 kg Phosphorsäure wurden in einem 1 m³-Rührautoklaven unter Luftausschluss 4 Stunden auf 280 °C erhitzt. Das entstandene Polymerisat enthielt noch 0,45 Gewichtsprozent Laurinlactam. 43,34 kg $\alpha, \omega$-Dihydroxy(polytetrahydrofuran) mit der Molmasse 860 (50,4 Mol) und 15 kg Wasser wurden hinzugefügt und unter dem sich einstellenden Druck von 18 bar 2 Stunden gerührt, 2 Stunden entspannt, dabei die Temperatur bis 260 °C erhöht. Es wurde bei Normaldruck unter Überleiten von Stickstoff polykondensiert. Nach 11 Stunden wurde ein Produkt mit einem $\eta_{rel}$-Wert von 2,0 erhalten. Der Lactamgehalt des Produktes beträgt 0,05 Gewichtsprozent.

## Beispiel 4

315,2 kg Laurinlactam (1600 Mol), 39,84 kg Isophthalsäure (240 Mol) und 0,12 kg Phosphorsäure wurden in einem 1 m³-Rührautoklaven 1 Stunde auf 290 °C erhitzt. Das erhaltene Vorpolymerisat enthielt noch 0,8 Gewichtsprozent Laurinlactam. 159,9 kg $\alpha$, $\omega$-Dihydroxy-(polytetrahydrofuran) mit der Molmasse 650 (246 Mol) und 14,8 kg Wasser wurden zugesetzt und unter einem Wasserdampfdruck von 19 bar 30 Minuten gerührt, 2 Stunden entspannt, dabei die Temperatur auf 270 °C erhöht. Bei dieser Temperatur wurde 5 Stunden Stickstoff übergeleitet und 7 Stunden ein Vakuum von 90 mbar angelegt. Das erhaltene Produkt weist einen $\eta_{rel}$-Wert von 2,1 und einen Lactamgehalt von 0,04 Gewichtsprozent auf.

## Beispiel 5

157,6 kg Laurinlactam (800 Mol), 112,8 kg Capryllactam (800 Mol), 6,02 kg Azelainsäure (31,05 Mol) und 0,3 kg Phosphorsäure wurden in einem 1 m³-Rührautoklaven 7¹/₂ auf 285 °C erhitzt. Das erhaltene Vorpolymerisat enthielt noch 0,75 Gewichtsprozent Laurinlactam. 34,15 kg Polytetrahydrofuran-diamin mit der Molmasse 1100 (31,05 Mol) und 14,2 kg Wasser wurden zugesetzt und unter dem sich einstellenden Druck von 18 bar 1¹/₂ Stunden gerührt, 2 Stunden entspannt, dabei die Temperatur auf 260 °C erhöht. Bei dieser Temperatur wurde 8 Stunden Stickstoff übergeleitet. Das erhaltene Produkt weist einen $\eta_{rel}$-Wert von 2,05 und einen Lactamgehalt von 0,12 Gewichtsprozent auf.

## Patentansprüche

1. Verfahren zur Herstellung von Polyetheramiden bzw. Polyether(ester)amiden durch Polykondensation von carboxylendgruppentragenden Polyamiden mit Hydroxylendgruppen und/oder aminoendgruppentragenden Polyethern unter Normaldruck oder vermindertem Druck, ggf. in Gegenwart von Katalysatoren, wobei man die endgruppentragenden Polyamide und die endgruppentragenden Polyether zunächst unter mechanischer Bewegung bei Temperaturen von 200 bis 300 °C unter einem Wasserdampfdruck von 5 bis 25 bar behandelt und nach dem Entfernen des Wassers durch Entspannen, die Polykondensation zu Ende führt, dadurch gekennzeichnet, dass man carboxylgruppentragende Polyamide einsetzt, welche erhalten worden sind durch Aufschmelzen eines Gemisches aus Lactamen mit mindestens 8 Kohlenstoffatomen und Dicarbonsäuren im Molverhältnis 100:1 bis 100:15 in Gegenwart eines Katalysators in einer Inertgasatmosphäre unter Normaldruck und in Abwesenheit von Wasser bei Temperaturen von 230 bis 300 °C, wobei das Aufschmelzen so lange erfolgt, bis die Lactame mindestens zu 98% umgesetzt sind.

2. Verfahren nach Anspruch 1, dadurch gekennzeichnet, dass die Lactame und Dicarbonsäuren im Molverhältnis 100:2 bis 100:10 eingesetzt werden.

3. Verfahren nach Anspruch 1, dadurch gekennzeichnet, dass die Lactame und Dicarbonsäuren im Molverhältnis 100:3 bis 100:7 eingesetzt werden.

4. Verfahren nach Anspruch 1, dadurch gekennzeichnet, dass als Lactam Laurinlactam und als Polyether $\alpha$, $\omega$-Dihydroxy-(polytetrahydrofuran) eingesetzt werden.

5. Verfahren nach Anspruch 1, dadurch gekennzeichnet, dass als Katalysator 0,02 bis 0,1 Gewichtsprozent Phosphorsäure eingesetzt werden.

6. Verwendung der nach den Ansprüchen 1 bis 5 erhaltenen thermoplastischen Polyetheramide und Polyether(ester)-amide zur Herstellung von Formkörpern hoher Kälteschlagzähigkeit bei tiefen Temperaturen.

## Revendications

1. Procédé de préparation de polyétheramides ou de polyéther(ester)amides par polycondensation de polyamides portant des groupes terminaux carboxyl avec des polyéthers portant des groupes terminaux hydroxyle et/ou portant des groupes terminaux amine, sous la pression normale ou sous pression réduite, le cas échéant en présence de catalyseurs, tandis qu'en agitant mécaniquement, on traite d'abord les polyamides portant des groupes terminaux et les polyéthers portant des groupes terminaux à des températures de 200 à 300 °C sous une pression de vapeur d'eau de 5 à 25 bar et qu'après avoir éliminé l'eau par détente, on conduit la polycondensation à sa fin, ledit procédé étant caractérisé par le fait qu'on utilise des polyamides portant des groupes carboxyles qui ont été obtenus en faisant fondre dans une atmosphère gazeuse inerte, sous la pression normale et en l'absence d'eau, à des températures de 230 à 300 °C, en présence d'un catalyseur, un mélange formé de lactames comportant au moins 8 atomes de carbone et d'acides dicarboxyliques dans une proportion molaire de 100:1 à 100:15, la fusion ayant lieu jusqu'à ce que les lactames soient convertis à 98% au moins.

2. Procédé selon la revendication 1, caractérisé par le fait qu'on utilise les lactames et les acides dicarboxyliques dans une proportion molaire de 100:2 à 100:10.

3. Procédé selon la revendication 1, caractérisé par le fait qu'on utilise les lactames et les acides dicarboxyliques dans une proportion molaire de 100:3 à 100:7.

4. Procédé selon la revendication 1, caractérisé par le fait qu'on utilise, comme lactame, le lactame laurique et, comme polyéther, l'alpha, oméga-dihydroxy-(polytétrahydrofuranne).

5. Procédé selon la revendication 1, caractérisé par le fait qu'on utilise, comme catalysator, de 0,02 à 0,1% en poids d'acide phosphorique.

6. L'utilisation, pour la préparation de corps moulés d'une résistance élevée au choc aux basses températures, des polyétheramides et polyéther(ester)amides thermoplastiques obtenues suivant les revendications 1 à 5.

**Claims**

1. A process for the production of a polyetheramide or a polyether(ester)amide by polycondensation of a polyamide having carboxyl end groups with a polyether having hydroxyl and/or amino end groups under normal or reduced pressure, optionally in the presence of a catalyst, the polyamide bearing end groups and polyether bearing end groups being treated initially at a temperature of 200 to 300 °C and a water vapour pressure of 5 to 25 bars with mechanical agitation and the polycondensation being brought to a conclusion after removal for the water by releasing the pressure, characterised in that a polyamide having carboxyl end groups is used which has been obtained by melting together a mixture of a lactam having at least 8 carbon atoms and a dicarboxylic acid in a molar ratio of 100:1 to 100:15 at a temperature of 230 to 300 °C in an inert gas atmosphere under atmospheric pressure in the presence of a catalyst but in the absence of water, the melting together being carried out long enough for at least 98% of the lactam to be reacted.

2. A process according to claim 1, characterised in that the lactam and dicarboxylic acid are used in a molar ratio of 100:2 to 100:10.

3. A process according to claim 1, characterised in that the lactam and dicarboxylic acid are used in a molar ratio of 100:3 to 100:7.

4. A process according to claim 1, characterised in that the lactam is laurolactam and the polyether is α, ω-dihydroxy-polytetrahydrofuran.

5. A process according to claim 1, characterised in that 0.02 to 0.1% by weight of phosphoric acid is used as catalyst.

6. The use of a polyetheramide or polyether(ester)-amide obtained according to any of claims 1 to 5 for the production of a moulding of high cold impact strength at low temperature.